# EUROPÄISCHE PATENTSCHRIFT

(11) **EP 3 650 620 B1**
(45) Veröffentlichungstag und Bekanntmachung des Hinweises auf die Patenterteilung: **09.06.2021**
(21) Anmeldenummer: 19197923.6
(22) Anmeldetag: 18.09.2019
(51) Int. Cl.: E05B 15/16, E05B 17/00, E05B 85/18

(54) **VERSCHLUSS EINER TÜR, HECKKLAPPE ODER EINER TANKDECKELABDECKUNG EINES KRAFTFAHRZEUGES MIT EINER GRIFFMULDE BILDENDE SCHALE**
LOCK FOR A DOOR, TAILGATE OR FILLER CAP WITH A SHELL FORMING HANDLE RECESS
FERMETURE D'UNE PORTE, UN HAYON OU UNE TRAPPE À ESSENCE AVEC UNE POIGNÉE ENCASTRÉE FORMANT UNE COQUE

(30) Priorität: 06.11.2018 DE 102018008707
(43) Veröffentlichungstag der Anmeldung: 13.05.2020
(73) Patentinhaber: K.L. Kaschier- und Laminier GmbH, 48455 Bad Bentheim-Gildehaus (DE)
(72) Erfinder: Roring, Albert, 48599 Gronau-Epe (DE); Schulze Wehninck, Rembert, 82327 Tutzing (DE)
(74) Vertreter: Cohausz Hannig Borkowski Wißgott

(56) Entgegenhaltungen:
- EP-A1- 0 447 223
- WO-A1-03/033259
- DE-A1-102008 029 447
- DE-A1-102014 218 226
- JP-B2- 3 471 164
- US-A1- 2007 001 467

## Beschreibung

Die Erfindung betrifft einen Verschluss einer Tür, Heckklappe oder einer Tankdeckelabdeckung eines Kraftfahrzeuges mit einer eine Griffmulde bildende Schale eines Verschlusses oder Zugangs einer Tür, Heckklappe oder einer Tankdeckelabdeckung eines Kraftfahrzeuges, wobei an der Schale außenseitig eine von Hand verschwenkbare Abdeckklappe angelenkt ist, die mit der Mechanik des Verschlusses verbunden ist zum Öffnen der Tür, der Heckklappe oder der Tankdeckelabdeckung.

Aus der EP 0 447 223 A1 ist das Problem schlechter Oberflächen von Formteilen aus faserverstärktem thermoplastischem Harz aufgrund der verwendeten Faserverstärkung, die an die Oberfläche der Formteile gelangt ist, bekannt. Durch die Verwendung eines mit Öffnungen versehenen Netzes während des Formprozess wird dieses Problem gelöst.

Die DE 10 2014 218 226 A1 beschreibt die Verwendung eines aus Faserverbundwerkstoff hergestellten Bauteils für ein Fahrzeug, dass aus einer Mehrzahl von übereinander gelegten und fixierten Faserlagen besteht, die zu Gelegen, Geweben und/oder Vliesen und in trockenem Zustand zu einem Halbzeug verarbeitet werden können.

In der WO 03/033259 A1 wird zur Erleichterung des Recyclings von Kunststoffverbundmaterialen und daraus hergestellter Formkörper ein sortenreines Einstoff-Verbundmaterial beansprucht. Der Kern besteht aus einem thermoplastischem Schaumstoff und mindestens einer Verstärkungsschicht aus einem Verbund aus Fasern oder Bändern desselben thermoplastischen Kunststoffs, aus dem auch der Schaumstoff besteht.

Zum Öffnen der Heckklappe eines Kfz ist es bekannt, eine Griffmulde anzuordnen, an der eine Abdeckklappe angelenkt ist, die von Hand hochgeschwenkt wird, um die Heckklappe zu entriegeln und zu öffnen. Hierbei hat es sich gezeigt, dass Unbefugte zum Öffnen die Schale gewaltsam zerstören insbesondere durch Hammerschläge.

Aufgabe der Erfindung ist es, einen eine Schale aufweisenden Verschluss einer Tür, Heckklappe oder Tankdeckelabdeckung so zu gestalten, dass ein gewaltsames Aufbrechen weitgehend verhindert wird. Ferner ist es Aufgabe der Erfindung die Stabilität der Bauteile zu erhöhen zur Verbesserung und Vereinfachung von Folgeprozessen wie dem Verschweißen.

Diese Aufgaben werden erfindungsgemäß dadurch gelöst,
- dass die Schale und/oder der äußere Rand der Schale als Verstärkung einen Verbundwerkstoff aus thermoplastischem Polypropylen oder Polyester aufweist mit mindestens einer insbesondere textilen Verstärkungslage mit Bändern, Fasern oder Fäden aus Polypropylen, Polyester, Metall, Karbon oder einem Aramid, und
- dass das Material der Schale und/oder des äußeren Randes der Schale ein eigenverstärkter thermoplastischer Verbundwerkstoff ist, der übereinander liegende Lagen aus thermoplastischem Polypropylen, Polyester oder Aramid aufweist, und
- Lagen aus homogener Polypropylenfolie, copolymerhaltiger Polyolefinfolie, homogener Polyesterfolie oder copolymerhaltiger Polyesterfolie mit Verstärkungslagen abwechseln, bei denen entweder das Polypropylen oder der Polyester band-, faserförmig oder fadenförmig ist, oder bei denen eine, zwei oder mehrere Verstärkungslagen Polypropylen-, bzw. Polyester-Bänder und/oder Polypropylen-, bzw. Polyester-Fasern und/oder Polypropylen-, bzw. Polyester-Fäden aufweisen.

Eine solche Schale besitzt eine hohe Stabilität und Widerstandsfähigkeit gegen von außen einwirkenden Kräften wie Hammerschläge, so dass ein unbefugtes Öffnen erheblich erschwert ist. Zudem erleichtert eine solche Schale hoher Stabilität nachfolgende Bearbeitungsschritte.

### Besonders vorteilhaft ist

- wenn die Bänder, Fasern oder Fäden aus Polypropylen, Polyester oder einem Aramid in den Verstärkungslagen ein Textil insbesondere Gewebe oder ein Gewirke bilden,
- wenn die Bänder und/oder Fasern in den Verstärkungslagen ungeordnet kreuz und quer angeordnet sind,
- wenn das Polypropylen-, oder Polyester-Material der mehrlagigen Schale eine Gesamtdicke von 0,5 mm bis 3 mm aufweist.

Ferner wird vorgeschlagen, dass die Abdeckklappe außenseitig ein Emblem bildet und die Abdecklappe an der Schale durch ein Gelenk verbunden und mit ihrem unteren Bereich nach außen hochschwenkbar ist.

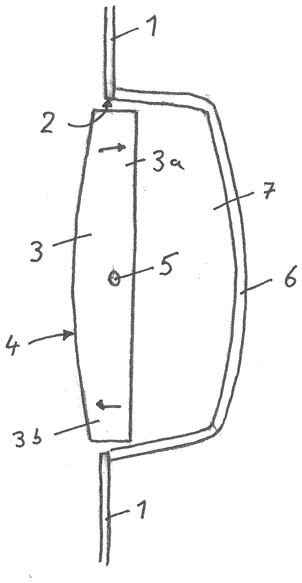

Ausführungsbeispiele der Erfindung werden im Folgenden näher beschreiben. Hierbei zeigt die Zeichnung einen senkrechten Schnitt durch einen Verschluss mit Schale und Abdeckklappe in einer schematischen Darstellung.

Das Blech 1 der Außenverkleidung einer Tür, Heckklappe oder Tankdeckelabdeckung eines Kfz. weist eine insbesondere kreisförmige Öffnung 2 auf, die durch eine insbesondere kreisförmige Abdeckklappe 3 ausgefüllt ist, die außenseitig ein Emblem 4 trägt. Die Abdeckklappe 3 ist um eine mittlere waagerechte Achse 5 verschwenkbar, die direkt oder indirekt an einer Schale 6 befestigt ist, die rückseitig der Abdeckklappe eine Griffmulde 7 bildet, in den der obere Bereich 3a der Abdeckklappe hinein schwenkbar ist. Das Hineinschwenken des oberen Bereichs 3a erfolgt durch Druck von Hand auf den oberen Bereich 3a gegen die Federkraft einer nicht dargestellten Rückstellfeder.

Beim Verschwenken der Abdeckklappe 3 gelangt ihr unterer Bereich 3b nach außen, so dass der untere Bereich von Hand hintergriffen werden kann, um die Heckklappe anzuheben oder die Tür oder die Tankdeckelabdeckung zu öffnen.

Die Abdeckklappe 3 ist mechanisch und/oder elektrisch mit einem Schloss/Verschluss der Heckklappe, Tür oder Tankdeckelabdeckung verbunden, so dass durch das Anheben der Abdeckklappe 3 die Heckklappe, Tür oder die Tankdeckelabdeckung entriegelt wird.

Die Schale 6 und/oder der äußere Rand der Schale besteht aus oder wird verstärkt mit einem Verbundwerkstoff aus thermoplastischem Polypropylen oder Polyester mit mindestens einer insbesondere textilen Verstärkungslage mit Bändern, Fasern oder Fäden aus Polypropylen, Polyester, Metall, Karbon oder einem Aramid. Das Material der Schale und/oder des äußeren Randes der Schale ist ein eigenverstärkter thermoplastischer Verbundwerkstoff, der übereinander liegende Lagen aus thermoplastischem Polypropylen, Polyester oder Aramid aufweist, wobei mindestens zwei Lagen aus homogener Polypropylenfolie, copolymerhaltiger Polyolefinfolie, homogener Polyesterfolie oder copolymerhaltiger Polyesterfolie mit mindestens zwei Verstärkungslagen abwechseln, bei denen entweder das Polypropylen oder der Polyester band-, faserförmig oder fadenförmig ist, oder bei denen die mindestens zwei Verstärkungslagen Polypropylen-, bzw. Polyester-Bänder und/oder Polypropylen-, bzw. Polyester-Fasern und/oder Polypropylen-, bzw. Polyester-Fäden aufweisen. Dabei sind die Bänder, Fasern oder Fäden aus Polypropylen, Polyester oder einem Aramid in den Verstärkungslagen ein Textil insbesondere Gewebe oder Gewirke. Vorzugsweise weist das Polypropylen-, oder Polyester-Material der mehrlagigen Schale 6 eine Gesamtdicke von 1,0 mm bis 3 mm auf.

Die Bänder und/oder Fasern können in den Verstärkungslagen in Form eines Gewebes oder Gewirkes angeordnet sein. Sie können aber auch ungeordnet kreuz und quer angeordnet sein.

## Patentansprüche

1. Verschluss einer Tür, Heckklappe oder einer Tankdeckelabdeckung eines Kraftfahrzeuges mit einer eine Griffmulde (7) bildende Schale (6), wobei an der Schale außenseitig eine von Hand verschwenkbare Abdeckklappe (3) angelenkt ist, die mit der Mechanik des Verschlusses verbunden ist zum Öffnen der Tür, der Heckklappe oder der Tankdeckelabdeckung, **dadurch gekennzeichnet,**
- **dass** die Schale und/oder der äußere Rand der Schale (6) als Verstärkung einen Verbundwerkstoff aus thermoplastischem Polypropylen oder Polyester aufweist mit mindestens einer insbesondere textilen Verstärkungslage mit Bändern, Fasern oder Fäden aus Polypropylen, Polyester, Metall, Karbon oder einem Aramid, und
- **dass** das Material der Schale (6) und/oder des äußeren Randes der Schale ein eigenverstärkter thermoplastischer Verbundwerkstoff ist, der übereinander liegende Lagen aus thermoplastischem Polypropylen, Polyester oder Aramid aufweist, und
- **dass** Lagen aus homogener Polypropylenfolie, copolymerhaltiger Polyolefinfolie, homogener Polyesterfolie oder copolymerhaltiger Polyesterfolie mit Verstärkungslagen abwechseln, bei denen entweder das Polypropylen oder der Polyester band-, faserförmig oder fadenförmig ist, oder bei denen eine, zwei oder mehrere Verstärkungslagen Polypropylen-, bzw. Polyester-Bänder und/oder Polypropylen-, bzw. Polyester-Fasern und/oder Polypropylen-, bzw. Polyester-Fäden aufweisen.

2. Verschluss nach Anspruch 1, **dadurch gekennzeichnet, dass** die Bänder, Fasern oder Fäden aus Polypropylen, Polyester oder einem Aramid in den Verstärkungslagen ein Textil insbesondere Gewebe oder ein Gewirke bilden.

3. Verschluss nach Anspruch 1 oder 2, **dadurch gekennzeichnet, dass** die Bänder und/oder Fasern in den Verstärkungslagen ungeordnet kreuz und quer angeordnet sind.

4. Verschluss nach einem der vorherigen Ansprüche, **dadurch gekennzeichnet, dass** das Polypropylen-, oder Polyester-Material der mehrlagigen Schale (6) eine Gesamtdicke von 0,5 mm bis 3 mm aufweist.

5. Verschluss nach einem der vorherigen Ansprüche, **dadurch gekennzeichnet, dass** die Abdeckklappe (3) außenseitig ein Emblem (4) bildet.

6. Verschluss nach einem der vorherigen Ansprüche, **dadurch gekennzeichnet, dass** die Abdecklappe (3) an der Schale (6) durch ein Gelenk verbunden und mit ihrem unteren Bereich (3b) nach außen hochschwenkbar ist.

## Claims

1. Lock of a door, tailgate or a tank cover of a motor vehicle, having a shell (6) forming a handle recess (7), wherein a cover flap (3) which can be pivoted by hand is articulated on the outer side of the shell, said cover flap being connected to the mechanism of the lock in order to open the door, the tailgate or the tank cover, **characterized**
- **in that** the shell and/or the outer edge of the shell (6) has, as reinforcement, a composite material composed of thermoplastic polypropylene or polyester with at least one in particular textile reinforcing layer comprising strips, fibres or threads composed of polypropylene, polyester, metal, carbon or an aramid, and
- **in that** the material of the shell (6) and/or of the outer edge of the shell is a self-reinforced thermoplastic composite material which has layers composed of thermoplastic polypropylene, polyester or aramid that lie above one another, and
- **in that** layers composed of homogeneous polypropylene film, copolymer-containing polyolefin film, homogeneous polyester film or copolymer-containing polyester film alternate with reinforcing layers, in the case of which either the polypropylene or the polyester is in the form of strips, fibres or threads, or in the case of which one, two or more reinforcing layers comprise polypropylene or polyester strips and/or polypropylene or polyester fibres and/or polypropylene or polyester threads.

2. Lock according to Claim 1, **characterized in that** the strips, fibres or threads composed of polypropylene, polyester or an aramid in the reinforcing layers form a textile, in particular a woven fabric or a knitted fabric.

3. Lock according to Claim 1 or 2, **characterized in that** the strips and/or fibres in the reinforcing layers are arranged in an unordered manner with random orientation.

4. Lock according to one of the preceding claims, **characterized in that** the polypropylene or polyester material of the multilayered shell (6) has a total thickness of 0.5 mm to 3 mm.

5. Lock according to one of the preceding claims, **characterized in that** the cover flap (3) forms an emblem (4) on the outer side.

6. Lock according to one of the preceding claims, **characterized in that** the cover flap (3) is connected to the shell (6) by way of a joint and the lower region (3b) of said cover flap can be pivoted upward towards the outside.

## Revendications

1. Fermeture d'une porte, d'un hayon ou d'une trappe à essence d'un véhicule automobile dotée d'une enveloppe (6) formant une poignée concave (7), un volet de recouvrement (3) pivotable manuellement étant articulé au niveau de l'enveloppe du côté extérieur, lequel est relié avec la mécanique de la fermeture pour l'ouverture de la porte, du hayon ou de la trappe à essence, **caractérisée**
- **en ce que** l'enveloppe et/ou le bord extérieur de l'enveloppe (6) présente en tant que renforcement un matériau composite composé de polypropylène ou polyester thermoplastique comportant au moins une couche de renforcement en particulier textile comportant des bandes, des fibres ou des fils de polypropylène, de polyester, de métal, de carbone ou d'un aramide, et
- **en ce que** le matériau de l'enveloppe (6) et/ou du bord extérieur de l'enveloppe est un matériau composite thermoplastique auto-renforcé qui présente des couches superposées de polypropylène, polyester ou aramide thermoplastique, et
- **en ce que** des couches composées de feuilles de polypropylène homogène, de feuilles de polyoléfine contenant un copolymère, de feuilles de polyester homogène ou de feuilles de polyester contenant un copolymère alternent avec des couches de renforcement, dans lesquelles soit le polypropylène, soit le polyester est en forme de bande, en forme de fibre ou en forme de fil, ou dans lesquelles une ou deux couches de renforcement ou plus présentent des bandes de polypropylène ou des bandes de polyester et/ou des fibres de polypropylène ou des fibres de polyester et/ou des fils de polypropylène ou des fils de polyester.

2. Fermeture selon la revendication 1, **caractérisée en ce que** les bandes, les fibres ou les fils de polypropylène, de polyester ou d'un aramide dans les couches de renforcement forment un textile en particulier un tissu ou une étoffe.

3. Fermeture selon la revendication 1 ou 2, **caractérisée en ce que** les bandes et/ou les fibres dans les couches de renforcement sont disposées de façon désordonnée dans tous les sens.

4. Fermeture selon l'une quelconque des revendications précédentes, **caractérisée en ce que** le matériau de polypropylène ou de polyester de l'enveloppe à plusieurs couches (6) présente une épaisseur totale de 0,5 mm à 3 mm.

5. Fermeture selon l'une quelconque des revendications précédentes, **caractérisée en ce que** le volet de recouvrement (3) du côté extérieur forme un emblème (4).

6. Fermeture selon l'une quelconque des revendications précédentes, **caractérisée en ce que** le volet de recouvrement (3) est relié à l'enveloppe (6) par une articulation et est pivotable avec sa partie inférieure (3b) vers le haut vers l'extérieur.
